# EUROPÄISCHE PATENTSCHRIFT

(11) **EP 0 894 294 B1**
(45) Veröffentlichungstag und Bekanntmachung des Hinweises auf die Patenterteilung: **22.01.2003**
(21) Anmeldenummer: 97920641.4
(22) Anmeldetag: 10.04.1997
(51) Int. Cl.: G05B 11/28, G05B 21/02, G05F 1/46

(54) **VERFAHREN ZUR STROMREGELUNG**
CURRENT CONTROL PROCESS
PROCEDE DE REGULATION DU COURANT

(30) Priorität: 16.04.1996 DE 19614866
(43) Veröffentlichungstag der Anmeldung: 03.02.1999
(73) Patentinhaber: ZF FRIEDRICHSHAFEN Aktiengesellschaft, 88038 Friedrichshafen (DE)
(72) Erfinder: HORSAK, Günther, D-88048 Friedrichshafen (DE); EGE, Hans-Jürgen, D-88212 Ravensburg (DE)
(74) Vertreter: Zietlow, Karl-Peter
(86) Internationale Anmeldenummer: EP9701778
(87) Internationale Veröffentlichungsnummer: WO97039388

(56) Entgegenhaltungen:
- EP-A- 0 544 300
- DE-A- 3 312 108
- DE-A- 3 525 070
- DE-A- 4 034 081
- US-A- 5 177 695
- PATENT ABSTRACTS OF JAPAN vol. 018, no. 355 (E-1573), 5.Juli 1994 & JP 06 090563 A (SANKEN ELECTRIC CO LTD), 29.März 1994,

## Beschreibung

Die Erfindung betrifft ein Verfahren zur Stromregelung für einen induktiven Verbraucher, insbesondere einen elektrohydraulischen Druckregler in einem Automatgetriebe.

Bei Automatgetrieben bestimmt ein elektronisches Steuergerät über elektromagnetische Druckregler den Verlauf und das Druckniveau in den Kupplungen und Bremsen. Die genaue Kenntnis des tatsächlichen Druckniveaus bzw. des eingestellten Stromwerts ist insofern sehr wichtig, da dieses unmittelbar den Schaltkomfort und die ordnungsgemäße Funktion des Automatgetriebes beeinflußt. In diesem Zusammenhang ist aus der DE-OS 40 34 081 eine Stromregelschaltung für einen induktiven Verbraucher bekanntgeworden. Der durch den induktiven Verbraucher fließende Strom wird über einen Meß-Widerstand gemessen. Dieser Strom-Istwert und ein Strom-Sollwert werden auf einen Vergleicher geführt. Ausgangswert des Vergleichers ist somit die Regelabweichung. Ein dem Vergleicher nachgeschalteter Regler steuert eine getaktete Leistungsendstufe, so daß letztlich der induktive Verbraucher mit einem PWM-Signal angesteuert wird.

Eine weitere Variante einer Stromregelung besteht darin, den mittels Meßwiderstand ermittelten Strom-Istwert über einen A/D-Wandler umzusetzen. Der Soll-/Istwert-Vergieich und die Regelung der Stellgröße erfolgen mittels eines Programms.
Da der Verbraucher über eine getaktete Endstufe mit einem PWM-Signal angesteuert wird, kommt es bei jeder Schaltflanke zu einer Überlagerung des Strom-/Istwerts mit Störspannungen (Transienten). Es besteht somit die Möglichkeit, daß als Meßwert nicht der tatsächliche Strom-/Istwert erfaßt wird, sondern ein Transient. Der beschriebene Stand der Technik weist somit den Nachteil auf, daß eine Mißinterpretation des Strom-/Istwerts möglich ist.

Die Erfindung hat infolgedessen zur Aufgabe, eine fehlerfreie Strommessung und Stromregelung zu gewährleisten.

Die Aufgabe wird erfindungsgemäß gemäß Anspruch 1 gelöst. Von Vorteil hierbei ist, daß die erfindungsgemäße Lösung ohne großen zusätzlichen Aufwand in ein bereits bestehendes Programm integriert werden kann. Als weiterer Vorteil ergibt sich eine erhöhte Regeldynamik, da ein Software-Filter, z. B. gleitende Mittelwertbildung, zum Glätten der Transienten entfällt. Bekanntermaßen führen Software-Filter zu einer Verlangsamung des Auswerteprozesses und zu einer hohen Rechnerbelastung.

In einer Ausgestaltung hierzu wird vorgeschlagen, daß bei betragsmäßig großen Strom-Sollwertänderungen auf den Verbraucher neben dem vom Regler gelieferten Ausgangssignal ein zusätzlich vorsteuerndes zweites Signal einwirkt und in Ausgestaltung hierzu wird vorgeschlagen, daß das zweite Signal mittels eines Vorsteuerblocks ermittelt wird. Diese Ausgestaltungen bieten den an sich bekannten Vorteil einer Vorsteuerung. Bekanntermaßen weist eine Vorsteuerung eine hohe Dynamik auf, da bei großen betragsmäßigen Änderungen diese nicht über den Regler ausgeglichen werden, sondern z. B. nur die letzten 10 %.

Die Erfindung ist nachstehend anhand eines in den Figuren gezeigten Ausführungsbeispiels dargestellt.
Es zeigen:
- Fig. 1: einen Regelkreis;
- Fig. 2: einen Signalverlauf mit überlagerten Transienten;
- Fig. 3: einen Regelkreis mit Vorsteuerung;
- Fig. 4: ein Zustands-Diagramm für einen Programmablauf für einen statischen Zustand und

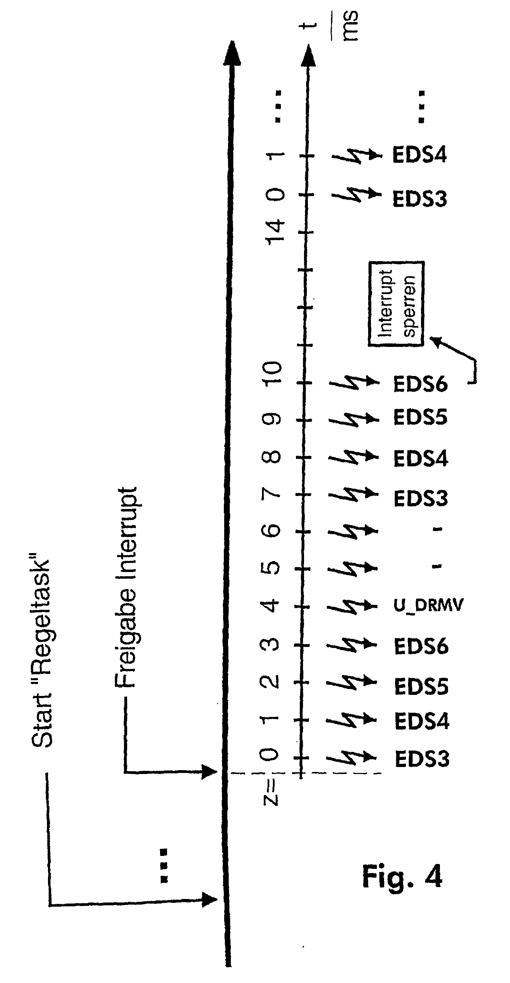

- Fig. 4: ein Zeit-Diagramm für einen Programmablauf bei einem dynamischen Zustand.

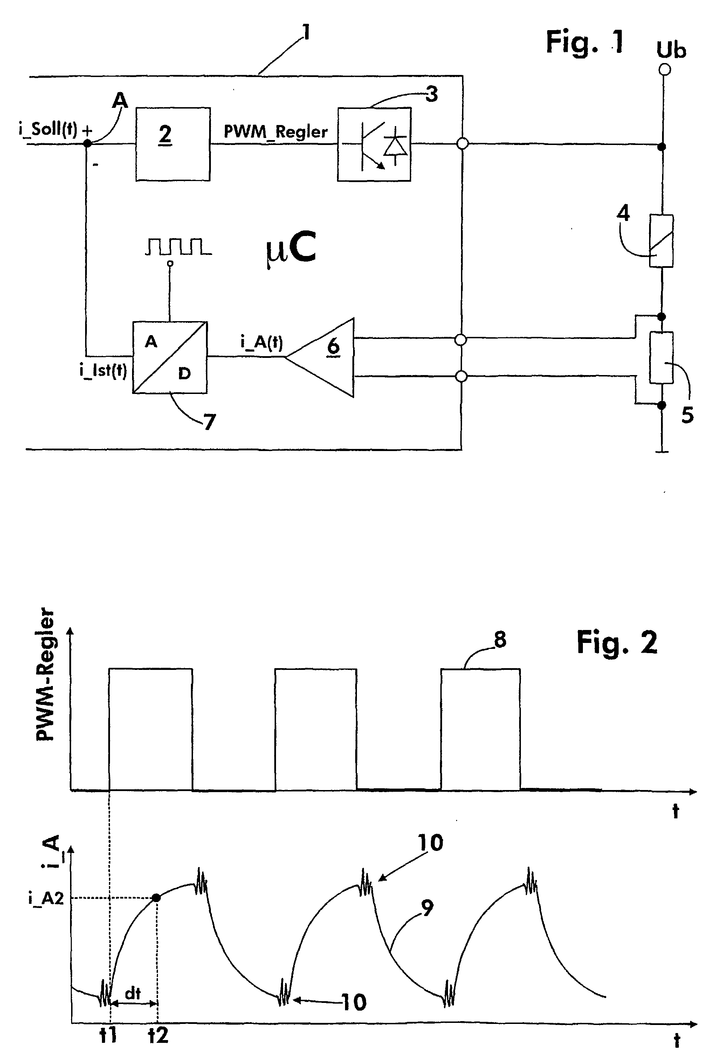

In Fig. 1 ist ein Regelkreis dargestellt, bestehend aus einem Regler 2, der Regelstrecke, hier ein elektromagnetischer Druckregler 4, der Istwert-Erfassung 5, 6 und 7 und dem Summationspunkt A. Führungsgröße ist ein Strom-Sollwert i_Soll(t). Regelgröße ist der tatsächlich anliegende Strom-Istwert i_Ist(t).
Der Regler 2, eine Endstufe 3, ein Vergleicher 6 und ein A/D-Wandler 7 sind Bestandteile eines elektronischen Steuergerätes mit Micro-Controller 1. Der Regler 2 gibt an die Endstufe 3 ein PWM-Signal aus, dessen Tastverhältnis stellvertretend für einen Stromwert steht. Diese wird über eine Versorgungsspannung Ub, z. B. 12 V, gespeist. Der elektromagnetische Druckregler 4 wird mit dem PWM-Signal beaufschlagt. Der sich tatsächlich einstellende Stromwert wird mittels eines Meßwiderstands 5 vom Vergleicher 6 erfaßt. Ausgangsgröße des Vergleichers 6 ist ein dem Stromwert i_A(t) entsprechendes Spannungssignal. Dieses Spannungssignal ist die Eingangsgröße für den A/D-Wandler 7, welcher die gleiche Taktfrequenz wie der Regler 2 hat. Die Ausgabefrequenz des Reglers 2 und die Abfragefrequenz des A/D-Wandlers 7 sind aufeinander synchronisiert. Ausgangsgröße des A/D-Wandlers 7 ist der Strom-Istwert i_Ist(t). Dieser wird am Summationspunkt A mit dem Strom-Sollwert i_Soll(t) verglichen. Die daraus sich ergebende Regelabweichung ist Eingangsgröße des Reglers 2.

Fig. 2 zeigt in der oberen Hälfte das vom Regler 2 ausgegebene PWM-Signal 8 über der Zeit. In der unteren Hälfte ist das ungefilterte Srommeßsignal i_A(t) 9 dargestellt. Aufgrund des nicht idealen Schaltverhaltens der Endstufe 3 in Verbindung mit der induktiven Last 4 wird mit jeder ansteigenden bzw. abfallenden Flanke das Strommeßsignal i_A(t) mit Transienten 10 überlagert. Bei der herkömmlichen Strom-Messung tritt nun hierbei folgendes Problem auf: bei asynchroner Taktfrequenz des Reglers 2 und Abfragefrequenz des A/D-Wandlers 7 können Takt- und Abfragezeitpunkte zeitlich nahe beieinanderliegen oder zusammenfallen. Wird nun z. B. zum Zeitpunkt t1 mit der ansteigenden Flanke des PWM-Signals ein Meßwert vom A/D-Wandler 7 erfaßt, so wird zwangsläufig der Transient 10 ausgewertet. Dies führt in diesem Fall zu einem falschen Strom-Istwert. Die erfindungsgemäße Lösung besteht nun darin, daß die Meßwert-Erfassung des A/D-Wandlers 7 zum Zeitpunkt t2 erfolgt. Mit anderen Worten: die Signalerfassung des A/D-Wandlers 7 ist um eine vorgebbare Zeit dt gegenüber der ansteigenden Flanke des PWM-Signals versetzt und synchronisiert. Hierdurch wird gewährleistet, daß ein störgrößenfreies Signal zu einem definierten Zeitpunkt erfaßt wird.

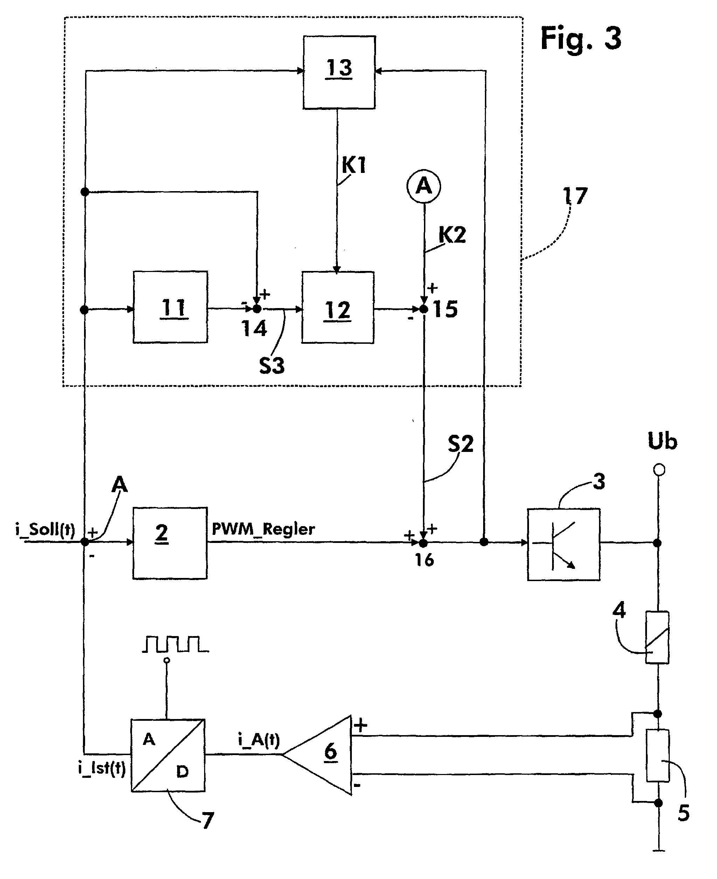

Fig. 3 zeigt einen Regelkreis mit zusätzlicher Vorsteuerung. Der Regelkreis ist identisch mit dem in Fig. 1 beschriebenen Regelkreis. Die Vorsteuerung bzw. der Vorsteuerblock 17 besteht aus folgenden Teilen: Speicher 11, erstem Funktionsblock 12 und zweitem Funktionsblock 13. Eingangsgrößen des Vorsteuerblocks sind die Führungsgröße des Regelkreises, der Strom-Sollwert i_Soll(t), und das Ausgangssignal des Reglers 2, PWM_Regler. Aus den beiden Eingangsgrößen wird im zweiten Funktionsblock 13 der Korrekturfaktor Kl ermittelt. Über den Korrekturfaktor K1 wird z. B. mitberücksichtigt, daß der Ohm'sche Widerstand des elektromagnetischen Druckreglers 4 temperaturabhängig ist. Eingangsgröße des Funktionsblocks 12 ist der erste Korrekturfaktor K1 und die Differenz vom aktuellen Strom-Istwert i_Ist(t) und dem zuletzt gemessenen Strom-Istwert i_Ist(t-1). Die Abweichung wird am Summationspunkt 14 ermittelt. Der zuletzt gemessene Strom-Istwert i_Ist(t-1) ist im Speicher 11 abgelegt. Ausgangsgröße des Funktionsblocks 12 ist somit die Änderung des Strom-Istwert, verrechnet mit dem ersten Korrekturfaktor K1. Diese Ausgangsgröße wird auf den Summationspunkt 15 geführt. Am Summationspunkt 15 wird diese mit einem zweiten Korrekturfaktor K2 verrechnet. Über den Korrekturfaktor K2 werden Schwankungen in der Versorgungsspannung Ub und die gegenseitige Beeinflussung mehrerer parallel liegender Druckregler mitberücksichtigt. In Fig. 1 und 3 sind diese parallel angeordneten elektro-magnetischen Druckregler nicht dargestellt. Die aus dem Vorsteuerblock 17 entstehende Ausgangsgröße S2 wird auf den Summationspunkt 16 geführt, so daß an diesem eine Addition des Ausgangssignals des Reglers 2, PWM_Regler, und dem Vorsteuersignal S2 stattfindet. Dieses wird auf die Endstufe 3 geführt. Die Funktion der Anordnung ist folgendermaßen: bei einer betragsmäßig hohen Strom-Sollwertänderung z. B. von 100 mA auf 600 mA wird über den Vorsteuerblock 17 unmittelbar auf die Endstufe 3 ein Stromwert von z. B. 550 mA eingestellt. Die Differenz zwischen 550 mA und 600 mA regelt nun der Regler 2 aus. Dadurch wird eine hohe Dynamik erzielt.

Fig. 4 zeigt ein Zeit-Diagramm für einen Programmablauf eines statischen Zustands. Statischer Zustand bedeutet, daß der Strom-Sollwert i_Soll(t) konstant ist. Der Programmdurchlauf beginnt mit dem Start der Regeltask und der Freigabe des Interupt. Zum Zeitpunkt Z = 0 beginnt das Programm, den ersten elektromagnetischen Druckregler, hier als EDS 3 bezeichnet, auszuregeln, d. h. es wird ein Soll-/Ist-Vergleich durchgeführt. Die Zeitdauer für diesen Regelvorgang beträgt üblicherweise < 0,1 ms. Zum Zeitpunkt Z = 1, also 1 ms später, beginnt für den EDS 4 ebenfalls die Ausregelung. Zum Zeitpunkt Z = 4 sind alle elektromagnetischen Druckregler ausgeregelt. Zwischen dem Zeitpunkt Z = 4 und Z = 7 liegt eine Pause, während der das Programm eine andere Task abarbeiten kann, z. B. die Bestimmung einer Fahraktivität. Zum Zeitpunkt Z = 7 wird wiederum ein Soll-/Ist-Vergleich für den elektromagnetischen Druckregler EDS 3 durchgeführt. Zum Zeitpunkt Z = 8 beginnt die Ausregelung für den zweiten elektromagnetischen Druckregler usw. Zum Zeitpunkt Z = 14 wurde somit jeder elektromagnetische Druckregler zweimal ausgeregelt. Hier endet die Regeltask.

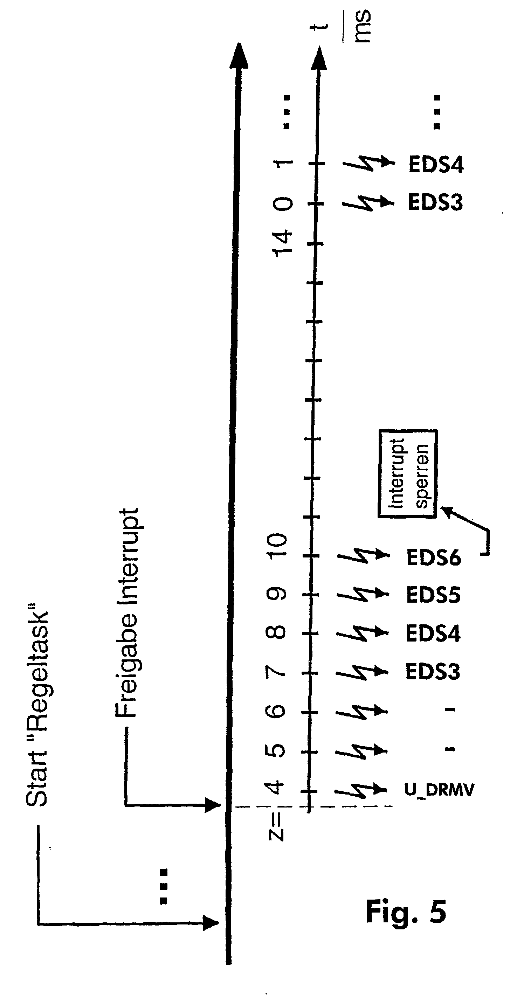

Fig. 5 zeigt ein Zeitdiagramm für den Programmablauf bei einem dynamischen Zustand. Dynamischer Zustand bedeutet, der Strom-Sollwert i_Soll(t) ändert sich. Der Programmablauf beginnt mit dem Start der Regeltask und der Freigabe des Interupt zum Zeitpunkt Z = 4. Freigabe des Interupt bedeutet, daß der normale Programmablauf vom Micro-Controller unterbrochen wird und die Regeltask zur Stromregelung abgearbeitet wird. Vom Zeitpunkt Z = 4 bis Z = 7 liegt eine Pause. Die Pause ist notwendig, um ein Überschwingen des Stromwerts zu verhindern, weil zuvor die Vorsteuerung aktiv war. Zum Zeitpunkt Z = 7 beginnt die Ausregelung des ersten elektromagnetischen Druckreglers, hier EDS 3. Zum Zeitpunkt Z = 10 ist der letzte elektromagnetische Druckregler, hier EDS 6, ausgeregelt. Danach wird der Interupt gesperrt, d. h., der Micro-Controller arbeitet den normalen Programmablauf weiter. Zum Zeitpunkt Z = 14 ist der Programmablauf durchlaufen und die Regeltask beendet.

### Bezugszeichen

- 1: elektronisches Steuergerät
- 2: Regler
- 3: Endstufe
- 4: elektromagnetischer Druckregler
- 5: Meßwiderstand
- 6: Verstärker
- 7: A/D-Wandler
- 8: Signalverlauf
- 9: Signalverlauf
- 10: Transienten
- 11: Speicher
- 12: erster Funktionsblock
- 13: zweiter Funktionsblock
- 14: Summationspunkt
- 15: Summationspunkt
- 16: Summationspunkt
- 17: Vorsteuerblock

- K1: erster Korrekturfaktor
- K2: zweiter Korrekturfaktor

## Patentansprüche

1. Verfahren zur Stromregelung für einen induktiven Verbraucher, insbesondere einen elektrohydraulischen Druckregler (4) in einem Automatgetriebe eines Kraftfahrzeugs, hierbei der Verbraucher der Regelstrecke entspricht, mit einem den Stromfluß durch den Verbraucher steuernden getakteten Regler (2), Ausgangsgröße (PWM_Regler), und mit einem in Reihe zum Verbraucher geschalteten Meßwiderstand (5), dessen Spannungsabfall als Strom-Istwert (i_Ist(t)) über einen A/D-Wandler (7) umgesetzt wird, aus Strom-Istwert (i_Ist(t)) und Strom-Sollwert (i_Soll(t)) eine Regelabweichung ermittelt wird, die Eingangsgröße für den Regler (2) ist, und wobei der Meßzeitpunkt über den Abfragetakt des A/D-Wandlers (7) um eine vorgebbare Zeit (dt) verzögert gegenüber dem Takt des Ausgangssignals (PWM_Regler) des Reglers (2) synchronisiert ist, **dadurch gekennzeichnet, daß** bei betragsmäßig großen Strom-Sollwertänderungen (i_Soll(t)) auf den Verbraucher (4) neben dem vom Regler (2) gelieferten Ausgangssignal (PWM_Regler) ein zusätzliches vorsteuerndes zweites Signal (S2) einwirkt.

2. Verfahren nach Anspruch 1, **dadurch gekennzeichnet, daß** das zweite Signal (S2) mittels eines Vorsteuerblocks (17) ermittelt wird, der Vorsteuerblock (17) aus einem Speicher (11), einem ersten Funktionsblock (12) und einem zweiten Funktionsblock (13) besteht und der Vorsteuerblock (17) als Eingangssignal den aktuellen Strom-Sollwert (i_Soll(t)) und das Ausgangssignal des Reglers (2), PWM-Regler, erhält.

3. Verfahren nach Anspruch 2, **dadurch gekennzeichnet, daß** aus dem Strom-Sollwert (i_Soll(t)) und dem Strom-Sollwert (i_Soll(t-1) einer Periode zuvor ein drittes Signal (S3) gewonnen wird, wobei dieses dritte Signal (S3) und ein erster Korrekturfaktor (K1) mittels des Funktionsblockes (12) das zweite Signal (S2) bestimmen.

4. Verfahren nach Anspruch 3, **dadurch gekennzeichnet, daß** der erste Korrekturfaktor (K1) aus dem aktuellen Strom-Sollwert (i_Soll(t)) und dem Ausgangssignal (PWM_Regler) des Reglers (2) zum gleichen Zeitpunkt gebildet wird.

5. Verfahren nach Anspruch 4, **dadurch gekennzeichnet, daß** in das zweite Signal (S2) zusätzlich ein zweiter Korrekturfaktor (K2) mit eingeht, wobei über den zweiten Korrekturfaktor (K2) Schwankungen in der Versorgungsspannung und die gegenseitige Beeinflussung der Verbraucher (4) mitberücksichtigt wird.

6. Verfahren nach Anspruch 1, **dadurch gekennzeichnet, daß** bei Einwirken des vorsteuernden Signals (S2) die Dynamik des Reglers durch Ausblenden von Abtastperioden reduziert wird, um ein Überschwingen der Regelgröße zu verhindern.

## Claims

1. Method of regulating the current for an inductive load, in particular an electrohydraulic pressure regulator (4) in an automatic transmission of a motor vehicle, the load corresponding in this connection to the controlled system, comprising a clocked regulator (2) controlling the current flow through the load, having an output variable (PWM_regulator), and comprising a measuring shunt (5) that is connected in series with the load and whose voltage drop is converted into actual current value (i_act(t)) by means of an A/D converter (7), a system deviation that is the input variable for the regulator (2) being determined from the actual current value (i_act(t)) and current setpoint value (i_set(t)), and the measuring time instant being synchronized by means of the scanning clock of the A/D converter (7) and delayed by a predeterminable time (dt) with respect to the clock of the output signal (PWM_regulator) of the regulator (2), **characterized in that** an additional precontrolling, second signal (S2) acts on the load (4) in addition to the output signal (PWM_regulator) supplied by the regulator (2) in the event of magnitudinally large setpoint current changes (i_set (t)).

2. Method according to Claim 1, **characterized in that** the second signal (S2) is determined by means of a pilot unit (17), the pilot unit (17) comprising a memory (11), a first functional unit (12) and a second functional unit (13) and the pilot unit (17) receives as input signal the actual current setpoint value (i_set(t)) and the output signal of the regulator (2), PWM regulator.

3. Method according to Claim 2, **characterized in that** a third signal (S3) is derived from the current setpoint value (i_set(t)) and the current setpoint value (i_set(t-1)) of one period earlier, said third signal (S3) and a first correction factor (K1) determining the second signal (S2) by means of the functional unit (12).

4. Method according to Claim 3, **characterized in that** the first correction factor (K1) is formed from the actual current setpoint value (i_set(t)) and the output signal (PWM_regulator) of the regulator (2) at the same time instant.

5. Method according to Claim 4, **characterized in that** a second correction factor (K2) concomitantly enters in addition into the second signal (S2), fluctuations in the supply voltage and the mutual interference of the loads (4) concomitantly being taken into account by means of the second correction factor (K2).

6. Method according to Claim 1, **characterized in that**, in the event of the precontrolling signal (S2) coming into action, the dynamic range of the regulator is reduced by suppressing sampling periods in order to prevent an overshoot of the controlled variable.

## Revendications

1. Procédé de régulation du courant pour un consommateur inductif, en particulier un régulateur de pression électro-hydraulique (4) dans une transmission automatique d'un véhicule automobile, où le consommateur correspond au trajet de régulation, comprenant un régulateur cyclique (2), grandeur de sortie (PWM_Regler), qui commande le passage du courant à travers le consommateur, et une résistance de mesure (5) connectée en série avec le consommateur, dont la chute de tension est convertie au moyen d'un convertisseur A/N(7), pour constitue la valeur réelle du courant (i_Ist (t)), dans lequel un écart de régulation est tiré à partir de la valeur réelle du courant (i_Ist (t)) et de la valeur de consigne du courant (i_Soll (t)) et constitue la valeur d'entrée pour le régulateur (2) et l'instant de mesure est synchronisé avec le cycle d'interrogation du convertisseur A/N (7), avec retard d'un temps (dt) pouvant être prédéterminé par rapport au cycle du signal de sortie (PMW_Regler) du régulateur (2), **caractérisé en ce que**, en présence de variations de la valeur de consigne du courant (i_Soll (t)) qui sont grandes en valeur absolue, un deuxième signal de précommande supplémentaire (S2) agit sur le consommateur (4), en plus du signal de sortie (PMW_Regler) fourni par le régulateur (2).

2. Procédé selon la revendication 1, **caractérisé en ce que** le deuxième signal (S2) est obtenu au moyen d'un bloc de précommande (17), le bloc de précommande (17) est composé d'une mémoire (11), d'un premier bloc de fonction (12) et d'un deuxième bloc de fonction (13), le bloc de précommande (17) reçoit, comme signal d'entrée, la valeur de consigne actuelle du courant (i_Soll (t)) et le signal de sortie du régulateur (2), (PWM_Regler).

3. Procédé selon la revendication 2, **caractérisé en ce que**, à partir de la valeur de consigne du courant (i_Soll (t)) et de la valeur de consigne du courant (i_Soll (t-1)) d'une période précédente, on tire un troisième signal (S3), ce troisième signal (S3) et un premier facteur de correction (K1) déterminant le deuxième signal (S2) au moyen du bloc de fonction (12).

4. Procédé selon la revendication 3, **caractérisé en ce que** le premier facteur de correction (K1) est formé à partir de la valeur de consigne actuelle du courant (i_Soll (t)) et du signal de sortie (PWM_Regler) du régulateur (2) au même instant.

5. Procédé selon la revendication 4, **caractérisé en ce que**, dans le deuxième signal (S2), entre en outre un deuxième facteur de correction (K2), les fluctuations de la tension d'alimentation et l'influence réciproque des consommateurs (4) étant aussi prises en compte au moyen du deuxième facteur de correction (K2).

6. Procédé selon la revendication 1,**caractérisé en ce que**, avec l'intervention du signal de précommande (S2), la dynamique du régulateur est réduite par élimination de périodes de détection, pour prévenir une suroscillation de la grandeur de réglage.
